# EUROPEAN PATENT APPLICATION

(11) **EP 2 439 603 A1**
(43) Date of publication of application: **11.04.2012**
(21) Application number: 10009869.8
(22) Date of filing: 18.09.2010
(51) Int. Cl.: G05B 19/042

(54) **User interface and appliance of household or industrial type**

(71) Applicant: Electrolux Home Products Corporation N.V., 1130 Brussels (BE)
(72) Inventor: Knausenberger, Martin, 91541 Rothenburg o. d. Tauber (DE); Hofmann, Arnd, Dr., 97511 Lülsfeld (DE); Brausseur, Jérôme, 33170 Pordenone (IT)
(74) Representative: Baumgartl, Gerhard Willi

(57) **Abstract**

The present application in particular is directed to a user interface for an appliance of household or industrial type, in particular baking oven or microwave oven, comprising a display panel 1, and a controller for controlling the display panel 1 and for processing operational parameters of a preset or user defined program into display information, wherein the controller is adapted to display in a first display panel section (7) at least one of a time course (3, 5) and chart of arrowed or curved geometry of at least one operational parameter.

## Description

The present application is directed to a user interface and an appliance of household or industrial type or a household appliance.

A user interface for a household appliance is known for example from DE 103 37 043 A1. The known user interface comprises an LED strip with several LEDs arranged in a line, acting as a time bar for indicating a start time, a stop time and an actual time therebetween. Further user interfaces for hold appliances are known from DE 103 07 756 A1 and DE 10 2004 038 418 A1.

It is an object of the invention to provide an alternative user interface for an appliance of household or industrial type. In particular, a user interface shall be provided that is able to ensure good visual performance and recognizability. Further, a respective appliance, in particular baking or microwave oven, shall be provided.

This object is achieved by independent claims 1 and 15. Embodiments of the invention result from the dependent claims.

According to independent claim 1, a user interface for an appliance of household or industrial type is provided. The appliance may be a baking oven or microwave oven or any other type of household appliance, such as a washing machine, a dishwasher, a refrigerator, a freezer and so on.

The user interface comprises a display panel preferably having a unique display surface. The user interface further comprises a controller which is designed and adapted at least for controlling the display panel and for processing operational parameters of a preset or user defined program into display information. Note that the controller may perform additional tasks, in particular related to other functions of the appliance.

The controller, and thus the display panel, are adapted to display in a first display panel section at least one of a time course and chart, preferably of arrowed or curved geometry, of at least one operational parameter. The term arrow shall mean that an arrowed structure or arrowed element of any type and size is provided in connection with a time course and/or chart. Such a structure or element preferably is provided for indicating an actual direction of change or movement of the respective operational parameter.

The term curved shall mean that the time course and/or chart can be a geometrical element of any length and curvature. In particular and without loss of generality, curved shall comprise any kind of circular, oval, wound and/or spiral shaped geometrical element. Further, any combination of arrowed and curved or bent geometrical structures are possible, such for example bent or circular arrows. In addition it is also possible to use arrowed linear elements or combinations of linear elements, linear arrowed elements, curved elements and curved arrowed elements. The respective geometrical elements or structures may be continuous or discontinuous, i. e. composed of several sub-elements or sub-structures. In the latter case, further elements, such as digits, numbers, letters icons, pictograms, icons, animated graphics icons and the like, can be displayed, in particular between adjacent sub-elements and sub-structures. The sub-structures and sub-elements can be displayed all at once, or one or several of them can be displayed in a chronologically staggered manner. Here it is possible, that one or several sub-elements are replaced by other or substituting sub-elements or sub-structures, in particular in the course of operating the appliance.

One of the advantages of the user interface is that it ensures good visual performance and recognizability of the displayed information. Further, a variety of information can be displayed with high perceptibility, as for example the curvature can be adapted to the type of information and also to requirements for adequate perceptibility on the display panel. Further, the user interface can be designed in a comparatively flat and thereby space-saving manner. As a consequence, the user interface can be applied to many different appliances.

In an embodiment, the controller is further adapted to display in at least one second display panel section, which is different from the first display panel section, at least one of a time course, chart and actual value of at least one operational parameter. It shall be mentioned, that the user interface can comprise further display panel sections of first or second display panel section type or other, each of which may be controlled by the controller. The second display panel section or further display panel section/s may be activated and deactivated according to respective needs and parameters to be displayed. The controller and the second and further display panel sections may be adapted to display thereon at least one of a time course, chart and actual value of parameter that that may be of relevance to a user of the appliance. The discussion above relating to time course and chart of the first panel section apply to time course, chart and actual value of the second and further display panel section(s). In particular, any kind of arrowed and curved as well as linear geometrical elements and sub-elements and others, in particular animated graphics icons, can be used with the second and further display panel section.

The information displayed in the second or further display panel section may relate to the operational parameter of the first panel section. In this case, additional or supplementary information, in particular related to the same operational parameter, can be provided. This may enhance perceptibility and contribute to good recognizability of displayed elements.

As already indicated, at least one of time course, chart and actual value is represented by at least one geometrical element at least one of continuous type and discontinuous type. Both a continuous and discontinuous type geometrical element can comprise several sub-elements. For example, a time course may comprise a straight line being aligned with an arrow and a sequence of digits arranged in between the straight line and the arrow. Such an element may also be a discontinuous arrow having an omission between its foot and head portion. The sequence of digits, such as numbers or letters, may represent an actual value of an operational parameter, for example. Any other representation of a time course, chart and actual value in connection with digits, icons, or other additional information lies within the scope of the invention.

In a preferred embodiment, at least one of the time course and chart is represented by at least one animated graphics icon. The animated graphics icon can be a superposition of at least one pictogram, in particular a static pictogram, and an image sequence of several images. The image sequence may be a time sequence of images, i. e. a film-like combination of images. The image sequence can for example comprise several images causing, if displayed successively, the impression of motion, i. e. that something is going on or still in progress, such as heating up, baking, cooling down and the like.

The images of the image sequence can vary in concert with respective parameter values. As an example, it is possible that the images vary in color or frequency or other values dependent on the current value of a respective operational parameter or dependent on a current operational status. For example, low temperatures may be accompanied by blue shaded images, and with rising temperatures the blue shade may be increasingly replaced by a red shade. As another example, comparative slow running processes can be accompanied by low image frequencies or repetition rates, whereas comparatively fast running processes can be accompanied by higher image frequencies, i. e. higher image repetition rates. As can be seen, using animated graphics icons makes it possible to provide an optimal optical feedback of a current operational parameter and/or status of the appliance to a user.

The image sequence and the pictogram, which pictogram may be a static picture or geometrical element, can be superposed in such a way that the images of the image sequence respectively extend over a predefined area of the display panel and are only visible in areas not covered or superimposed by static pictogram sections. Note that the static pictogram may be implemented as a fixed printing of the display panel or display surface. However, it is also possible that the pictogram is implemented as a static image displayed as a foreground image. In this case the images of the image sequence can be displayed as background images superimposed by the pictogram.

In a further preferred embodiment, at least one image sequence is adapted to be superposed with several different pictograms. In this way, memory space needed for electronically storing image sequences can be greatly reduced and a smaller and cheaper memory unit can be used. The image sequence or image sequences as well as static pictograms can be stored in an internal storage unit of the user interface.

A wealth of information can be presented with proper perceptibility if the operational parameters relating to the first and second display panel sections are different. The respective operational parameters may be selected to provide mutual supplementary information. However it is also possible that operational parameters are selected which are substantially independent of each other. In this connection, it is possible to select any operational parameter that intentionally or unintentionally fluctuate or change at least one of prior, during and after execution of the program. Such parameters may be selected from preheating temperature, heating or cooking temperature, cooling-off temperature, elapsed program duration, remaining program duration, a residual time up to a start time of the program or of a subsequent program, and others.

In an embodiment, the time course or chart is defined by an initial value, an end value and an intermediate value. Preferably, respective geometrical elements for visualizing the time course or chart are at least one of a line and arrow of linear or curved type. The time course or chart may relate to an operational time, temperature, humidity, energy consumption, power level and other operational parameters intended to change during execution of a program or which are relevant for or during execution of the program. If the operational parameter is selected to be the operational time, the intermediate value preferably indicates at least one of an elapsed time, residual time and actual time or time point.

In a preferred embodiment, the controller is adapted to calculate at least one of the initial value, end value or intermediate value on the basis of a single one or a limited number of these parameters. This means that the information requested from a user or required to be entered by a user can greatly be reduced. In this connection, it is possible that upon entry of a desired start or end time by a user, the end time or start time or even intermediate time is calculated by the controller by using the known duration of the program or parts of the program. Note, that it is also possible that the user enters the program duration. Further, the user interface may comprise actuators such as knobs, buttons, sliders and touch sensitive elements designed and adapted to set and change operational parameters of the appliance.

In a preferred embodiment, the display panel comprises a TFT or LED based display, which are especially suitable for displaying geometrical structures, elements or objects of any type, in particular of linear, curved or arrowed type, image sequences and pictograms. The display panel may be a touch sensitive panel allowing the user to directly communicate or interact with the appliance, in particular for setting and changing respective operational parameters or for selecting a respective program the user intends to execute. In the alternative or in addition, the user interface may comprise an optical projection based display system via which the information to be displayed to a user can be projected to a given, nearby area or surface. The area or surface may for example be a section of the floor, of an adjacent wall, of front faces of adjacent objects such as appliances or furniture, and the like.

Further it is preferred that the controller is adapted to move at least one display element or animated graphics icon of the first and second display panel section over the display panel, in particular according to a parameter change or parameter change velocity. With such a configuration the display can be updated and adapted to actual parameter values quasi in real-time and with optimal clarity and perceptibility of the information presented on the display panel.

The parameter can be selected from the group of overall operation time, intermediate operational time, temperature, in particular temperature prevailing outside, on the surface or inside an object to be treated in the course of execution of the program, temperature distribution in a treatment chamber, type of operational unit, such as top and lower heating units, powered in the course of execution of the program, actual operational power, in particular power output, of an operational unit or power unit, all in particular relative to at least one of a respective initial, in particular minimum, and designated, in particular maximum, parameter value. As can be seen, nearly any type of parameter that may be relevant to a user can be displayed, in particular with good perceptibility and clarity.

According to independent claim 15, an appliance, in particular oven or microwave oven or any other household appliance is provided. The appliance comprises at least one user interface in any configuration described in connection with the invention. Note that the appliance may be of any other type as already mentioned beforehand. As to advantages and advantageous effects, reference is made to the discussion above.

Embodiments of the invention will now be described in connection with the annexed figures, in which
- Fig. 1: shows a first embodiment of a display panel of a user interface;
- Fig. 2: shows the display panel of Fig. 1 in a different configuration;
- Fig. 3: shows the display panel of Fig. 1 in a yet further configuration;
- Fig. 4: shows the display panel of Fig. 3 in a different configuration;
- Fig. 5: shows a second embodiment of a display panel of a user interface;
- Fig. 6: shows a third embodiment of a display panel of a user interface;
- Fig. 7: shows a fourth embodiment of a display panel of a user interface;
- Fig. 8: shows a fifth embodiment of a display panel of a user interface; and
- Fig. 9: schematically shows the way of generating an animated graphics icon.

The invention will be described in connection with a user interface with display elements related to baking ovens. However, this shall not be construed as limiting the scope of the invention. Rather, the user interface and display panel can readily be applied to any other appliance mentioned so far, with information to be displayed may probably be different and adapted to respective appliance requirements.

If not otherwise stated like elements are denoted by like reference signs throughout the figures. The figures may not be true to scale, and scales of different figures may be different.

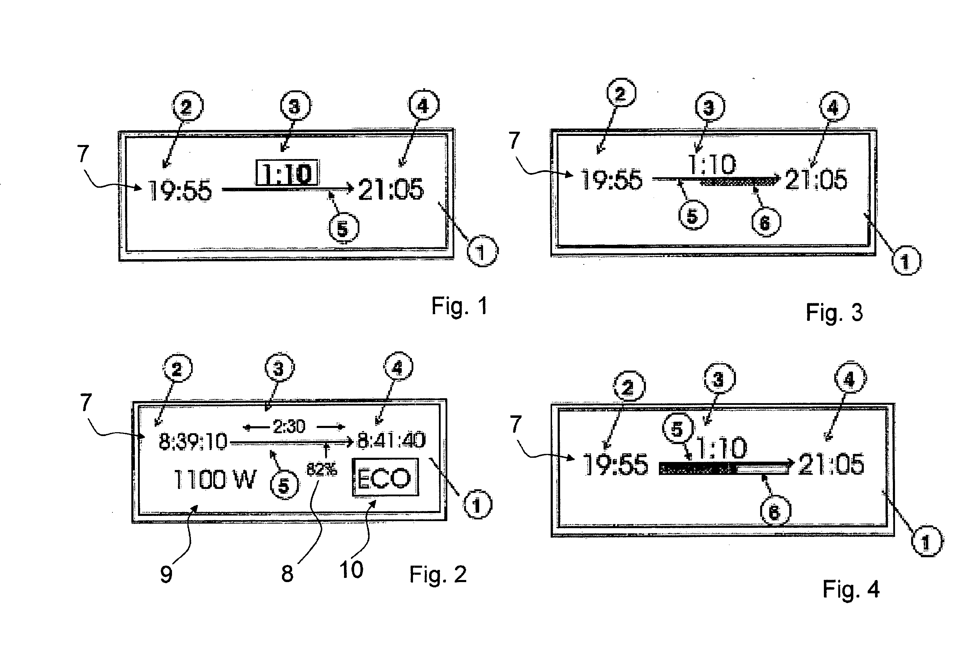

Fig. 1 shows a first embodiment of a display panel 1 that is part of a user interface. The user interface may belong to a baking oven or microwave oven. Besides the display panel, the user interface further comprises a controller (not shown) at least for controlling the display panel 1, optionally for controlling certain functions of the baking oven or other appliance.

The controller is further adapted to process operational parameters of a preset or user defined program into display information. The program may be any program intended to be run on the baking oven or other appliance for the purpose of baking or heating foodstuff and the like, for example. Such a program may also be a self-cleaning program to be executed with baking muffles and the like.

The program or the operation of the appliance is, according to common practice, implemented with a variety of parameters such as program time, operational time, temperature, humidity within a baking or cooking chamber, output power of heating elements and the like, type of heating element to be activated and other.

The controller is adapted to display in a first display panel section at least one of a time course and chart of arrowed or curved geometry of at least one of the operational parameters. The parameters to be displayed may be the ones that are relevant for a user to execute the program and to operate the oven. However, any other information desired by users can be displayed.

With the display panel 1 of the first embodiment, a start time 2 and a stop time 4 for the program is indicated. An arrow 5 starting at the start time 2 and running in vertical direction towards the stop time 4 is displayed. The arrow 5 is of linear type with a direction of advancing time being indicated by an arrowhead at the right hand side. Other elements anywhere in between the left-hand and right-hand side of the arrow 5 can be used to visualize the direction of advancing time.

In a region lying approximately centered above the arrow 5, the overall operational time 3 or optionally the remaining operational time is displayed. At least the section of the display panel 1 comprising the arrow 5 and optionally the start time 2, the stop time 4 and the operational time 3 can be considered as a first display panel section 7 in which the time course of the operational time is displayed in the meaning of claim 1.

Fig. 2 shows the display panel 1 of Fig. 1 in a different configuration. With the display panel 1, in more detail in the first display panel section 7, there also are indicated the start time 2 and the stop time 4, and the arrow 5 running therebetween in vertical direction. Also, the operational time 3, presently the overall operational time of 2 minutes and 30 seconds, together with two further arrows indicating that the span between the start time 3 and the stop time 4 shall be representative for the remaining operational time, is displayed above arrow 5.

In addition to the items or elements displayed on the display panel 1 of Fig. 1, there is further provided an indicator 8, comprising a short vertical arrow and a percentage, indicating the remaining operational time as a percentage of the overall operational time. The short arrow together with the percentage, i. e. the indicator 8, is positioned or displayed at a respective percentage of the arrow 5, i. e. in the present case at 82 % of the overall length of the arrow 5. The indicator 8 may be a static display element, which shall mean that its position does not change in concert with progression of time. However, the position of the indicator 8, or at least of the short vertical arrow, may vary in concert with progression of time, such that it is always positioned at a respective percentage of the arrow length along the arrow 5. Instead of the short arrow any other suitable geometric element, such as a short vertical line and the like, can be used

With the display panel 1 of Fig. 2 there is further indicated in a second display panel section 9 the output power or operational power of a heating element of the appliance. In the present case the operational power amounts 1100 W. In a third display panel section 10 additional information about the operational mode, here "ECO"-mode or other parameters, in particular operational parameters of the appliance, can be displayed.

Fig. 3 shows the display panel of Fig. 1 in a yet further configuration. The first display panel section 7 is quite similar to that of Fig. 1 except that there is further provided a time bar 6 arranged below the arrow 5 and indicating as a shaded, bar shaped rectangle the time remaining up to the stop time 4. In this configuration, the time course of the operational time is indicated by the arrow 5 as well as by the time bar 6 representing a type of chart.

Fig. 4 shows the display panel of Fig. 3 in a slightly different configuration. The display panel, or in more detail, the first display panel section 7, comprises a time bar 6 which indicates, in contrast to the time bar 6 of Fig. 3, an elapsed time relative to the start time 2. The time bar 6 is arranged below the arrow 5 and visualised as such as an elongated rectangle. The elapsed time is visualized by a shaded region of the rectangle, which shaded region is extended further towards the stop time 4 during operation of the appliance going on. Note that the time bar 6 may be positioned above the arrow 5 or in a different display panel section of the display panel 1.

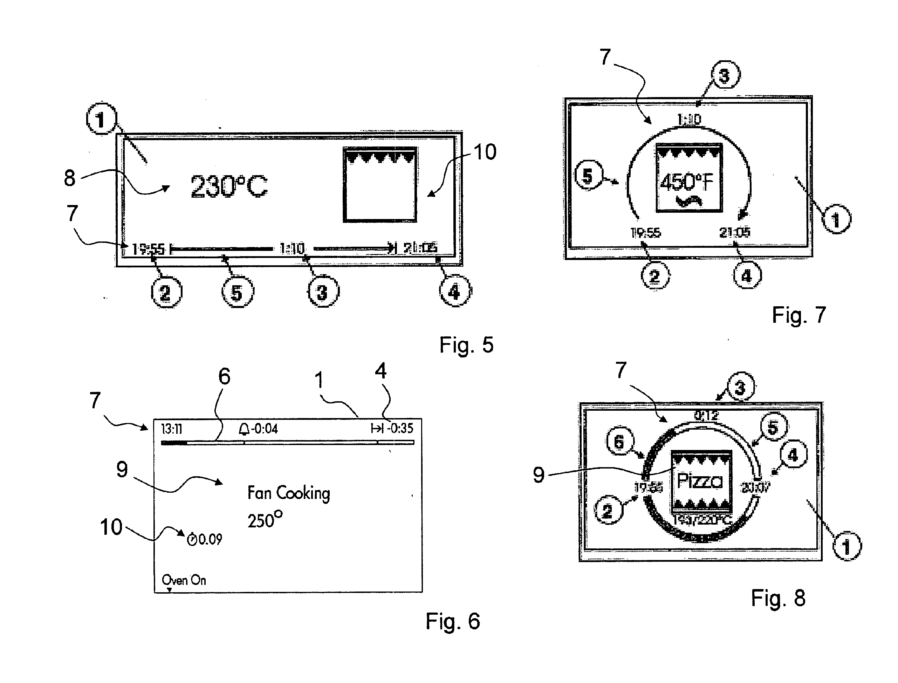

Fig. 5 shows a second embodiment of a display panel of a user interface. In a first display panel section 7 a time course of the operational time is visualized. Here, an arrow 5 running between a start time 2 and a stop time 4 is used. The arrow 5 starts at the start time 2 and runs up to a section in which the operational time is indicated. The arrow 5 continues from the operational time and runs up to the stop time 4. In other words, the arrow 5 is discontinued in the section in which the operational time is indicated or displayed. The position of the section indicating the operational time may shift along the arrow 5 with increasing time.

In a second display panel section 9 of the display panel 1 an actual temperature is indicated. The actual temperature may for example be the temperature prevailing within a baking chamber of the baking oven.

In a third display panel section 10 of the display panel 1, there is indicated a chart visualising the type of heating element actually powered. In the present case, the chart indicates that a top heating element of a baking chamber, or muffle, of the baking oven is active.

Fig. 6 shows a third embodiment of a display panel of a user interface. The first display panel section 7 in the present case is arranged in an upper area of the display panel 1. In the first display panel section 7, the actual time, i. e. time of day is displayed, which in the present case is "13:11". Further, a stop time 4 is indicated, which in the present case represents in a count down type display a residual time. On or along a time bar 6 there is further provided a counting down timer which is displayed in the present case with an alarm bell. The counting down timer shows "-0:04", which shall mean that there are still 4 minutes left up to the end of a certain program or sub-program or routine, for example. The time bar 6 represents time or time intervals relating to elapsed and/or running processes in dark shading, i. e. with dark shaded bars. Processes to be carried out and respective time intervals are visualized in bright shading, i. e. with bright shaded bars.

Note that the display of a time point or time intervals can be of any type and may comprise all convenient formats in hours (h), minutes (m) or seconds (s) such as hh:mm or mm:ss or hh:mm:ss and others.

If the user has defined a start time lying in future, or a stop time lying in future by more than the operational time, there may be indicated a time or time bar visualising the time remaining up to the start of the program to be executed in future.

In the present case, the program is already running and the time bar 6 indicates the time elapsed since start, wherein the length of the dark shading of the time bar 6 grows with advancing time.

In a mid section of the display panel 1 there is indicated in a second display panel section 9 the type of cooking mode. In the present case, the oven is operated in a fan cooking mode, i. e. the oven may operate with recirculating air. Further, the temperature within the appliance, the temperature within a baking chamber of an oven, for example, is displayed. In the present case, the oven has a temperature of 250 °C.

In a third display panel section 10 there is shown an up-timer displaying time in the format hh:mm or mm:ss counting the time elapsed since start of the appliance or a program section or sub-program executed with the appliance. The up-timer is shown together with an icon displaying a type of clock.

In a left-hand lower section of the display panel it is indicated that the oven is operating by use of the self-explanatory term "Oven On".

There may be indicated in a further display section a temperature value measured with a temperature probe that may be visualized by a respective small icon showing an illustration of a temperature sensor. The further temperature value may correspond to a surface or inner temperature of an item to be cooked or baked in a backing chamber of the baking oven. The further temperature may be visualized in concert with a bar being either a temperature bar indicating a relative position of the further temperature, i. e. surface of inner temperature, with respect to a maximal or minimal value, or a time bar indicating for example the time that already elapsed from a starting time, from the starting time of a subroutine of the program executed by the oven, or from a point of time in which the surface or inner temperature for the first time exceeded a preset minimum temperature value.

Fig. 7 shows a fourth embodiment of a display panel 1 of a user interface. The fourth embodiment differs from the first and second embodiment in that the time course is indicated by a curved, in more detail circular, arrow 5 pointing from the start time 2 in clockwise direction to the stop time 4. The arrowed, curved time course is displayed in a first display panel section 7 which in the present case is annular, i. e. ring-shaped.

In the middle of the circular arrow 5, i. e. the annular first display panel section 7, there is defined a second display panel section 9, which in the present case comprises a chart indicating the actual temperature within a baking chamber for example, the type of heating element used, and other operational modes. The heating element presently indicated is a top heating element and the other operational parameter in form of a small icon indicates that the baking oven is operated with recirculating air.

Fig. 8 shows a fifth embodiment of display panel 1 of a user interface. Similar to the fourth embodiment, a first display panel section 7 has an annular shape with a discontinued annular bar 6. The annular bar 6 is divided into two segments, wherein a start time 2 and a stop time 4 are displayed in gaps separating respective segments of the annular bar 6. The upper segment in the present case visualizes in dark shading, and in addition by respective digits, the time that already has elapsed since the start time 2. The rest of the upper segment of the bar 6, representative of the time up to the stop time 4, is not shaded. The lower segment of the annular bar 6 indicates and visualizes in a shading the heat up progress, wherein the fraction of shading of the second segment relative to the whole segment is representative of the actual temperature relative to a target temperature. The actual temperature and target temperature are additionally displayed in digits below a chart displayed in a second display panel section 9. The second display panel section 9 lies within the annular first display panel section 7. The chart of the second display panel section 9 in the present case indicates that a top and bottom heating element of the baking oven is activated and that a program for baking pizza is executed.

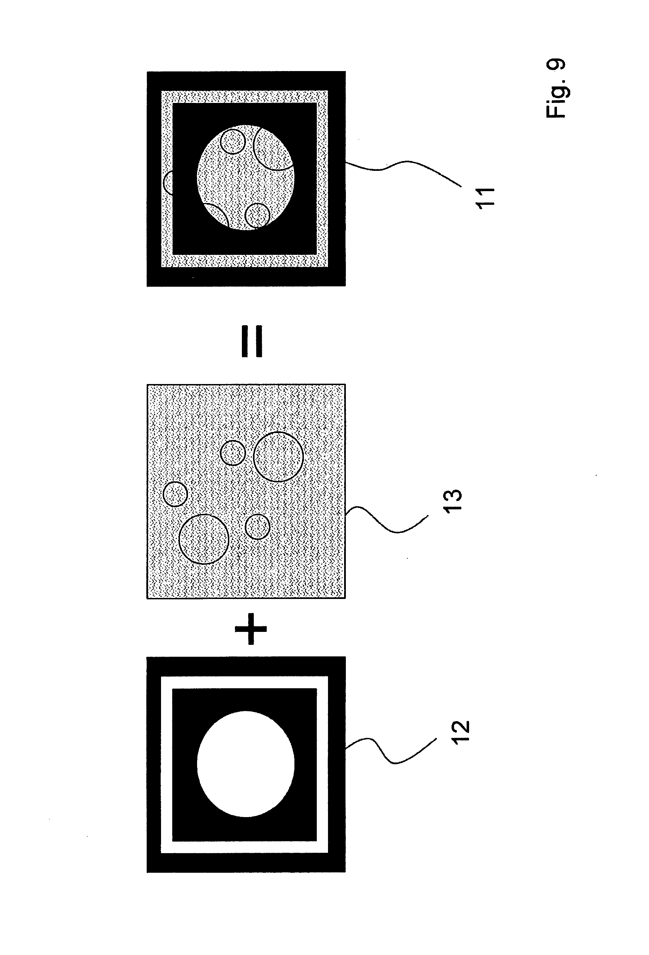

Fig. 9 schematically shows the way of generating an animated graphics icon 11. Such an animated graphics icon 11 may be displayed on a display panel 1 together with other display elements so far described, or such an animated graphics icon 11 may also be displayed alone.

The animated graphics icon 11 is a superposition of a static pictogram 12 and an image sequence 13 of several images, which in Fig. 9 is indicated in an equation-like manner. Note that in Fig. 9 only one image of a sequence of images is displayed. The static pictogram 12 may be displayed on the display panel 1 as a static image in the foreground. The images of the image sequence 13 may be displayed in the background, such that the images are only visible at predefined, i. e. translucent, areas of the pictogram 12. It is also possible, that the pictogram 12 is applied as a fixed, preferably activatable, graphics element to the display panel 1, in the form of a printing or foil or the like. Activatable shall mean that the pictogram 12 can be visualized on the display panel 1 or made invisible according to respective requirements or needs.

The images of the image sequence 13 can be displayed in a film-like manner such that information about a selected operational parameter is indicated to a user. The image sequence 13 can comprise a limited number of images which images are repeatedly displayed. In the course of displaying the image sequence 13, in particular when the images are displayed repeatedly, the images can be varied and adapted in order to account for changes in respective operational parameters. For example, the color shade or repetition rate of the images can be varied in dependence of a respective actual parameter value, parameter change and/or parameter change velocity.

A microcontroller of the display panel 1 may be used to process the image sequence 13 and, as the case may be, the pictogram 12. Further, the microcontroller may be used to superpose and display the animated graphics icon 11. The image sequence 13 and, as the case may be, the pictogram 12, may be stored in an electronic storage unit. It may well be that a respective image sequence 13 can be used with several pictograms 12, each pictogram 12 representing a different operational mode for example. In this case storage space can be greatly reduced.

As a specific example, a foreground pictogram showing a representation of an oven can displayed together with a background film-like image sequence of images respectively showing different pictures of burning wood. Such an animated graphics icon can be used for the heating-up phase of one or more operational modes. When the respective operational mode is left and another operational mode is entered a further animated graphics icon can be displayed. For example, an ongoing baking or grilling process may be indicated by a foreground pictogram symbolizing the respective operational mode and an image sequence leading to an animated representation of a fireplace with glowing coals. Note that the specific examples only suggest and indicate the great variety and wealth of possibilities to display operational parameters by animated graphics icons, and shall therefore not be regarded as limiting the scope of protection.

As can in particular be seen from the embodiments shown in connection with the figures, the proposed user interface ensures good visual performance and recognizability of different kinds of parameters and information to be visualized to a user. In particular, all relevant parameters for cooking or baking can be presented in necessary compact yet intuitive kind which in turn is advantageous for a positive user experience.

All the user interfaces shown so far can further comprise actuators, such as buttons, sliders, touch sensitive elements and the like, at least allowing the user to set and adjust the operational parameters. Such additional actuators offer a maximum of flexibility. For example it is possible, that on working days, on which the user pays special attention to get the meal in the oven finished to a fixed time point, e.g. the return from work in the evening, the user just sets, via respective actuators, the stop time 4 and the duration of the cooking or baking process. In doing so, the start time 2 is also fixed. The start time 2 can be automatically be calculated from the given parameters by the controller of the user interface. On the week-end, e. g. when baking a cake, it is more comfortable to set the start time 2 and the baking time by direct access, where the stop time 4 in this case may be calculated by the controller.

Note that the latter is also applicable to washing machines and other household appliances such as microwave ovens, dishwashers and the like. Note further that the start time 2 and stop time 4 may also be selected or set such that the appliance runs in time intervals with reduced electricity rates, e. g. overnight.

If no program is run on the appliance, the user interface can just display a time, the actual time for example, or in the case of operating the appliance without a preset program, the start time and a time counter displaying the time elapsed since the start time 2.

### List of reference numerals

- 1: display panel
- 2: start time
- 3: operational time
- 4: stop time
- 5: arrow
- 6: time bar
- 7: first display panel section
- 8: indicator
- 9: second display panel section
- 10: third display panel section
- 11: animated graphics icon
- 12: pictogram
- 13: image sequence

## Claims

1. User interface for an appliance of household or industrial type, in particular baking oven or microwave oven, comprising a display panel (1), and a controller for controlling the display panel (1) and for processing operational parameters of a preset or user defined program into display information, wherein the controller is adapted to display in a first display panel section (7) at least one of a time course (2, 3, 4, 5, 6) and chart, preferably of arrowed or curved geometry, of at least one operational parameter.

2. User interface according to claim 1, wherein the controller is further adapted to display in at least one second display panel section (9, 10) other than the first display panel section (7) at least one of a time course (2, 3, 4, 5, 6), chart and actual value of at least one operational parameter.

3. User interface according to claim 1 or claim 2, wherein at least one of time course (2, 3, 4, 5, 6), chart and actual value is represented by at least one geometrical element at least one of continuous type and discontinuous type.

4. User interface according to at least one of claims 1 to 3,
wherein at least one of an operational mode of the appliance, a time course and chart is represented by at least one animated graphics icon (11).

5. User interface according to claim 4, wherein the at least one animated graphics icon (11) is a superposition of at least one pictogram (12) and an image sequence (13) of several images.

6. User interface according to claim 5, wherein at least one image sequence (13), preferably stored in an electronic memory, is adapted to be superposed with several pictograms (12).

7. User interface according to at least one of claims 1 to 6, wherein the operational parameters relating to the first and second display panel sections (7, 9, 10) are different.

8. User interface according to at least one of claims 1 to 7, wherein at least one of the displayed parameters fluctuates at least one of prior, during and after execution of the program.

9. User interface according to at least one of claims 1 to 8, wherein the time course (2, 3, 4, 5, 6) or chart is defined by an initial value (2), an end value (4) and an intermediate value, and wherein the time course (2, 3, 4, 5, 6) is preferably visualized by the controller by means of at least one of a line, time bar (6) and arrow (5) of linear or curved type.

10. User interface according to claim 9, wherein the intermediate value indicates at least one of an elapsed time, residual time and actual time.

11. User interface according to at least one of claims 1 to 10, wherein the controller is adapted to calculate at least one of the initial value (2), end value (4) or intermediate value on the basis of a single one or a combination of these parameters.

12. User interface according to at least one of claims 1 to 11, wherein the controller is adapted to move at least one display element or animated graphics icon of the first and second display panel section (7, 9, 10) over the display, in particular according to a parameter change or parameter change velocity.

13. User interface according to at least one of claims 1 to 12, wherein the display panel (1) comprises at least one of a TFT- or LED- based display and optical projection based display.

14. User interface according to at least one of claims 1 to 13, wherein the at least one operational parameter is selected from the group of overall operation time, an intermediate operational time, a start time (2), a stop time (4), a temperature, in particular a temperature prevailing outside,
on the surface or inside of an object to be treated in the course of execution of the program, a temperature distribution in a treatment chamber, type of operational unit powered in the course of execution of the program, actual operational power of an operational power unit, all in particular relative to at least one of a respective initial (2) and designated parameter value (4).

15. Appliance, especially household appliance, in particular oven or microwave oven, comprising at least one user interface according to at least one of claims 1 to 14.
